# EUROPEAN PATENT APPLICATION

(11) **EP 4 779 155 A1**
(43) Date of publication of application: **22.07.2026**
(21) Application number: 23951798.0
(22) Date of filing: 13.09.2023
(51) Int. Cl.: F04D 13/06, F04D 29/58, H02K 3/50

(54) **FLUID PUMP**

(71) Applicant: Johnson Electric International AG, 3280 Murten (CH)
(72) Inventor: ZHOU, Dawei, Shenzhen, Guangdong 518125 (CN); SHI, Bin, Shenzhen, Guangdong 518125 (CN); CHEN, Zhengsheng, Shenzhen, Guangdong 518125 (CN); FANG, Chuanhui, Shenzhen, Guangdong 518125 (CN); YU, Biao, Shenzhen, Guangdong 518125 (CN); LI, Zhijun, Shenzhen, Guangdong 518125 (CN)
(74) Representative: Doherty, William
(86) International application number: PCT/CN2023/118604
(87) International publication number: WO 2025/054857

(57) **Abstract**

This present disclosure provides a fluid pump, including a pump housing, an impeller and a motor, the motor including a stator assembly and a rotor assembly, the stator assembly including a stator housing, a stator core, a coil, a conductive terminal, a terminal supporting portion for supporting the conductive terminal, and a circuit board; a partition plate is provided in the stator housing, dividing an internal space of the stator housing into a first space and a second space, the coil and the circuit board being respectively disposed in the first space and the second space; the partition plate being recessed toward the circuit board to form an avoidance groove for accommodating the terminal supporting portion; one end of the conductive terminal in an axial direction being located in the terminal supporting portion, and the other end of the conductive terminal in the axial direction passing through a bottom of the avoidance groove and being connected to the circuit board. The present disclosure can effectively reduce heat of the coil from dissipating toward the circuit board, thereby effectively controlling temperature of the circuit board.

## Description

### TECHNICAL FIELD

This application relates to a pump, particularly to a fluid pump.

### BACKGROUND

A fluid pump generally includes a pump housing, an impeller rotatably disposed in the pump housing, and a motor that drives the impeller to rotate in the pump housing. During operation of the motor, its coil generates a large amount of heat and the heat spreads toward a circuit board, resulting in temperature of the circuit board becoming excessively high and causing failures.

### SUMMARY

In view of this, the present disclosure provides a fluid pump which can effectively control temperature of a circuit board.

A fluid pump, including a pump housing, an impeller disposed in the pump housing, and a motor connected to the impeller, the motor including a stator assembly and a rotor assembly, the impeller being connected to the rotor assembly, the stator assembly including a stator housing, a stator core disposed in the stator housing, a coil wound on the stator core, a conductive terminal electrically connected to the coil, a terminal supporting portion for supporting the conductive terminal, and a circuit board electrically connected to the conductive terminal; a partition plate is provided in the stator housing, the partition plate dividing an internal space of the stator housing into a first space and a second space, the coil and the circuit board being respectively disposed in the first space and the second space; the partition plate is recessed toward the circuit board to form an avoidance groove for accommodating the terminal supporting portion; one end of the conductive terminal in an axial direction is located in the terminal supporting portion, and the other end of the conductive terminal in the axial direction passes through a bottom of the avoidance groove and is then connected to the circuit board.

Compared with the prior art, the fluid pump provided by the present disclosure separates the coil and the circuit board by the partition plate, thereby preventing heat of the coil from dissipating toward the circuit board; in addition, the partition plate is recessed toward the circuit board to form an avoidance groove to accommodate the terminal supporting portion, so that only a small through hole adapted to the size of the conductive terminals needs to be provided at the bottom of the avoidance groove of the partition plate, further preventing heat of the coil from dissipating toward the circuit board, effectively controlling the temperature of the circuit board, and avoiding failures caused by excessively high temperature.

### BRIEF DESCRIPTION OF THE DRAWINGS

Fig. 1 is a schematic structural view of a fluid pump according to a preferred embodiment of the present disclosure.
Fig. 2 is a plan view of the fluid pump shown in Fig. 1.
Fig. 3 is a sectional view of the fluid pump shown in Fig. 2 taken along line III-III.
Fig. 4 is an enlarged view of circle IV in Fig. 3.
Fig. 5 is a sectional view of the fluid pump shown in Fig. 2 taken along line V-V.
Fig. 6 is an exploded view of the fluid pump shown in Fig. 1.
Fig. 7 is a further exploded view of an impeller of the fluid pump shown in Fig. 6.
Fig. 8 is a plan view of a stator outer housing of a motor of the fluid pump shown in Fig. 6.
Fig. 9 is a perspective sectional view of the stator outer housing.
Fig. 10 is a plan view of the stator inner housing and a motor shaft of the motor of the fluid pump shown in Fig. 6.
Fig. 11 is a perspective sectional view of the stator inner housing and the motor shaft.
Fig. 12 is another perspective view of a stator core, an insulating frame, a coil, and a conductive terminal of the motor of the fluid pump shown in Fig. 6.
Fig. 13 is a plan view of the stator core, the insulating frame, the coil, and the conductive terminal shown in Fig. 12.
Fig. 14 is a further exploded view of a rotor assembly of the motor of the fluid pump shown in Fig. 6.
Fig. 15 is another perspective view of a pump housing of the fluid pump shown in Fig. 6.

Reference numerals: 10, pump housing; 12, inlet; 14, outlet; 16, second shaft seat; 20, impeller; 22, bottom plate; 24, cover plate; 26, blade; 30, motor; 32, stator assembly; 320, first shaft seat; 320a, notch; stator outer housing; 322, connecting portion; 323, stator inner housing; 324a, first rib portion; 324b, second rib portion; 325, stator core; 326, insulating frame; 3261, terminal supporting portion; 327, coil; 328, conductive terminal; 329, circuit board; 34, rotor assembly; 342, supporting body; 343, rotor core; 345, permanent magnet; 347, shaft hole; 36, end cap; 38, partition plate; 381, first space; 383, second space; 385, avoidance groove; 387, through hole; 40/42/44, thermally conductive medium; 50/52/54, sealing ring; 60, motor shaft; 62, guide groove; 70, washer; 72, slot.

### DETAILED DESCRIPTION OF THE EMBODIMENTS

In order to facilitate the understanding of this present disclosure, a more comprehensive description will be provided below with reference to the relevant accompanying drawings. The drawings exemplarily illustrate one or more embodiments of this present disclosure, making the understanding of the technical solutions disclosed in this present disclosure more precise and thorough. However, it should be understood that this present disclosure can be implemented in various forms and is not limited to the embodiment described below.

In the accompanying drawings of this present disclosure, the same or similar reference numerals correspond to the same or similar components. It should be understood that in this present disclosure, terms such as "up," "down," "left," and "right" are used to indicate positional or directional relationships based on the orientations or positions shown in the drawings. These terms are merely for the convenience of describing this present disclosure and simplifying the description, and they do not indicate or imply that the devices or elements referred to must have a specific orientation or be constructed and operated in a specific orientation. Therefore, the terminology used to describe positional relationships in the drawings is solely for illustrative purposes and should not be understood as limiting the present invention. The specific meanings of the aforementioned terms can be understood by those skilled in the art based on the specific circumstances.

In addition, if the embodiments of the present disclosure involve descriptions such as "first," "second," etc., these descriptions are for illustrative purposes only and should not be construed as indicating or implying their relative importance or implicitly specifying the quantity of the indicated technical features. Thus, features defined as "first," "second," etc., may explicitly or implicitly include at least one such feature. Furthermore, if "and/or" appears throughout the text, its meaning includes three parallel solutions. Taking "A and/or B" as an example, it includes the solution A, the solution B, or the solution where both A and B are satisfied.

In addition, the technical solutions of various embodiments can be combined with each other, but this must be based on the premise that such combinations can be realized by those skilled in the art. When the combination of technical solutions results in contradictions or is impossible to achieve, it should be considered that such a combination does not exist and is not within the protection scope claimed by the present disclosure.

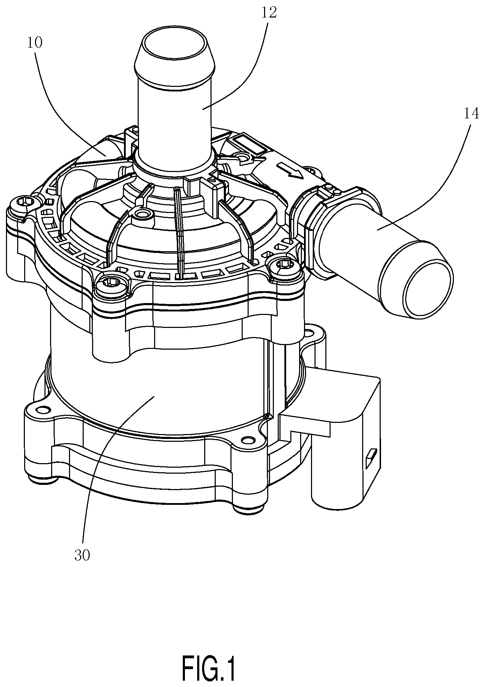

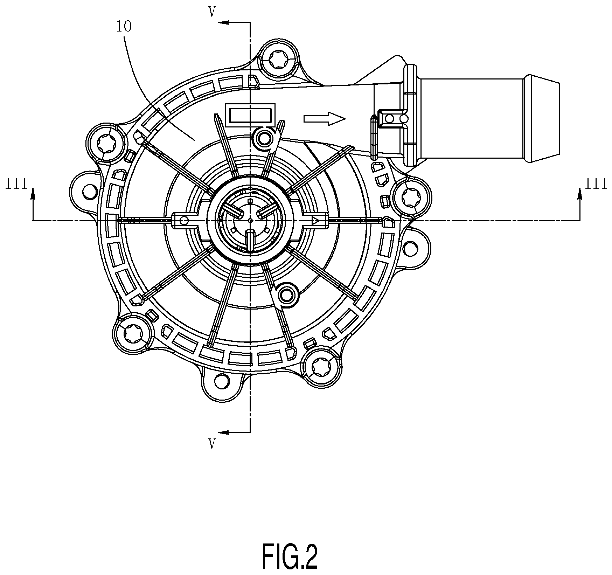

The present disclosure provides a fluid pump, such as a water pump. Figs. 1 to 6 show a specific embodiment of the fluid pump of the present disclosure, and the illustrated pump includes a pump housing 10, an impeller 20 disposed in the pump housing 10, and a motor 30 that drives the impeller 20 to rotate in the pump housing 10.

As shown in Fig. 1, the pump housing 10 is provided with an inlet 12 and an outlet 14. The inlet 12 and the outlet 14 are respectively used to connect to external pipelines to constitute a flow path for fluid. In this embodiment, the inlet 12 extends along an axial direction of the pump housing 10, and the outlet 14 extends generally tangentially along an outer peripheral surface of the pump housing 10, that is, the inlet 12 and the outlet 14 are substantially perpendicular to each other.

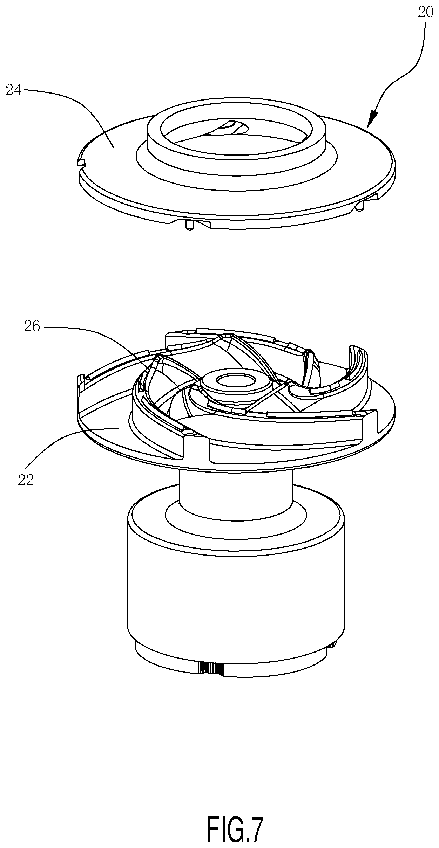

Please also refer to Fig. 7, the impeller 20 has an overall disc-shaped structure and includes a bottom plate 22 and a cover plate 24 that are opposite to each other and spaced apart, and a plurality of blades 26 are provided between the bottom plate 22 and the cover plate 24. An overall diameter of the impeller 20 is slightly smaller than an inner diameter of the pump housing 10, and a gap exists between the two, so that the impeller 20 can freely rotate in the pump housing 10 and push the fluid to flow toward the outlet 14. Preferably, the blades 26 are integrally injection-molded with the bottom plate 22, and the cover plate 24 is connected to the bottom plate 22 by means of a snap-fit or the other. In some embodiments, the cover plate 24 and the bottom plate 22 may also be connected by ultrasonic welding or bonding. In some embodiments, the cover plate 24 and the bottom plate 22 may also be an integral structure.

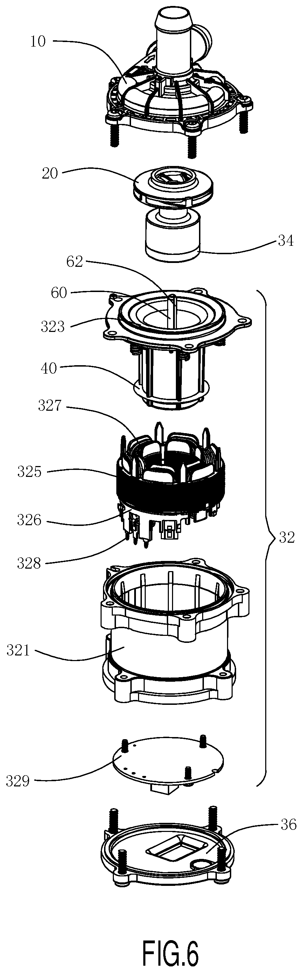

As shown in Fig. 6, in this embodiment, the motor 30 is an inner-rotor motor and includes a stator assembly 32 and a rotor assembly 34 rotatably disposed in the stator assembly 32. The stator assembly 32 is connected to the pump housing 10, and the rotor assembly 34 is connected to the impeller 20, preferably as an integral structure. After the motor 30 is started, the rotor assembly 34 rotates about an axial direction of the stator assembly 32, thereby driving the impeller 20 connected thereto to rotate in the pump housing 10.

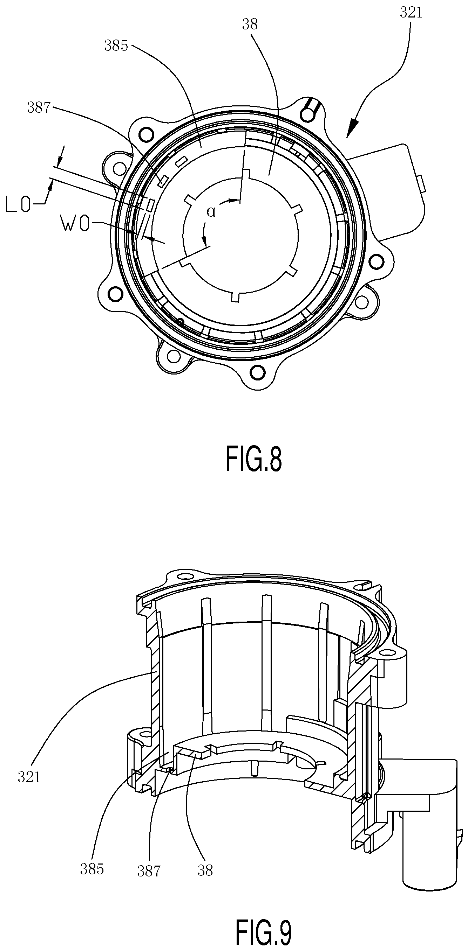

Please also refer to Figs. 8 to 11, the stator assembly 32 includes a stator outer housing 321, a stator inner housing 323, a stator core 325 disposed between the stator inner housing 323 and the stator outer housing 321, a coil 327 wound on the stator core 325, a conductive terminal 328 electrically connected to the coil 327, and a terminal supporting portion 3261 for supporting the conductive terminal 328. The stator assembly 32 is electrically connected to a circuit board 329 via the conductive terminal 328. After the motor is started, the circuit board 329 supplies current to the coil 327 and controls a direction and magnitude of current in the coil 327, so that the stator assembly 32 can generate a periodically varying rotating magnetic field, which interacts with a permanent magnet of the rotor assembly 34 to drive the rotor assembly 34 to rotate, thereby driving the impeller 20 to rotate.

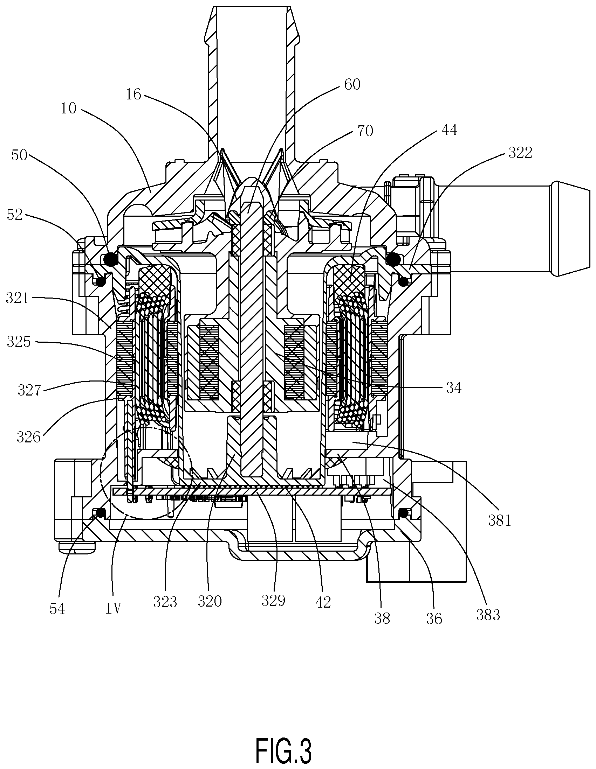

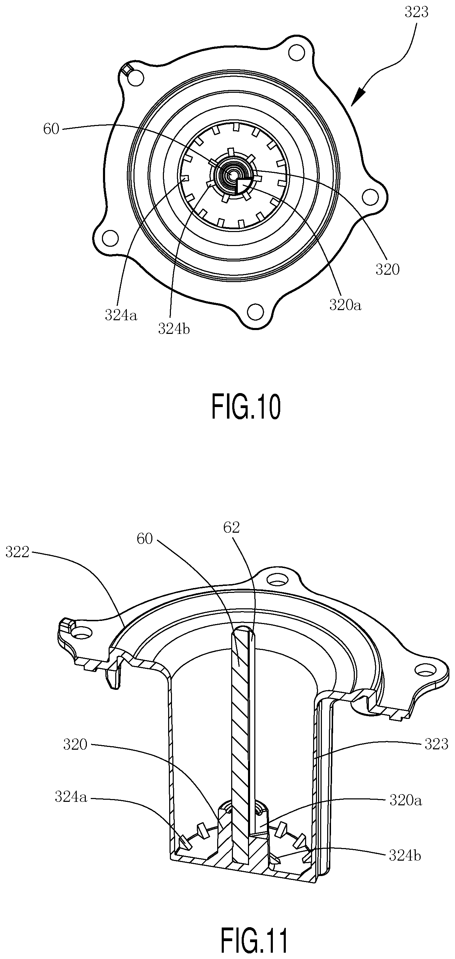

As shown in Figs. 8 to 9, the stator outer housing 321 is substantially a tubular structure with openings at both ends, and includes a first end (e.g., a top end) and a second end (e.g., a bottom end) which are opposite in the axial direction. The first end is connected to the pump housing 10 by a fastener, such as screw; the second end is connected to an end cap 36 by a fastener, such as screw, and may also be connected by ultrasonic welding, friction welding, or other adhesive means. As shown in Figs. 10 to 11, the stator inner housing 323 is substantially a tubular structure, and includes an open end (e.g., a top end) and a closed end (e.g., a bottom end) which are opposite in the axial direction. The open end faces toward the pump housing 10, and the closed end faces toward the end cap 36. An outer diameter of the stator inner housing 323 is smaller than an inner diameter of the stator outer housing 321. After assembly, the stator inner housing 323 is disposed in the stator outer housing 321, and the two are radially spaced; the rotor assembly 34 is rotatably disposed in the stator inner housing 323, referring to Fig. 3.

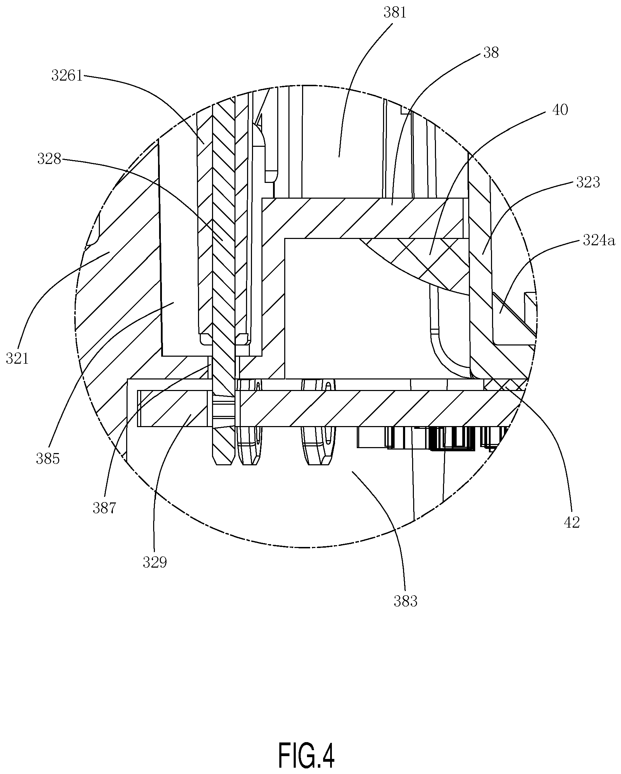

As shown in Figs. 3, 4, and 9, a partition plate 38 is provided between an inner wall of the stator outer housing 321 and an outer wall of the stator inner housing 323, and a position of the partition plate 38 is relatively close to the closed end of the stator inner housing 323 and away from the open end of the stator inner housing 323. In this embodiment, the partition plate 38 is formed by integrally extending from the inner wall of the stator outer housing 321 at a position near the second end toward the stator inner housing 323. Preferably, an inner diameter of the partition plate 38 is comparable to an outer diameter of the stator inner housing 323, so as to fit as closely as possible to the outer wall of the stator inner housing 323, reducing a gap therebetween. A thermally conductive medium, such as a thermally conductive medium 40 (refer to Fig. 4), may be added between the partition plate 38 and the circumferential outer wall of the stator inner housing 323, so as to conduct heat of the partition plate 38 to the fluid flowing into the stator inner housing 323 through the stator inner housing 323. Preferably, the thermally conductive medium 40 surrounds the circumferential outer wall of the stator inner housing 323, thereby closing a gap between the partition plate 38 and the stator inner housing 323.

By the provision of the partition plate 38, a space between the stator outer housing 321 and the stator inner housing 323 is divided into two relatively independent parts. At an upper side of the partition plate 38, a radial spacing between the stator outer housing 321 and the stator inner housing 323 serves as a first space 381 for installing the stator core 325 and the coil 327; At a lower side of the partition plate 38, a portion surrounded by the stator outer housing 321 and the end cap 36 serves as a second space 383 for installing the circuit board 329.

In some embodiments, the partition plate 38 may also be formed separately and then assembled to a corresponding position of the stator outer housing 321 and/or the stator inner housing 323, as long as the first space 381 and the second space 383 can be partitioned out and a heat-insulation effect can be achieved between the coil 327 and the circuit board 329.

As shown in Figs. 8 to 9, an outer edge of the partition plate 38 is recessed toward the circuit board 329 to form an avoidance groove 385 for accommodating the terminal supporting portion 3261. One end of the conductive terminal 328 in the axial direction is located in the terminal supporting portion 3261 and electrically connected to the coil 327, and the other end in the axial direction passes through a bottom of the avoidance groove 385 and is then connected to the circuit board 329. The motor 30 is preferably a three-phase motor, the number of the conductive terminals 328 being three or four, three or four through holes 387 being correspondingly provided at the bottom of the avoidance groove 385 of the partition plate 38 for the conductive terminals 328 to pass through. As shown in Fig. 8, in this embodiment, three through holes 387 are provided at the bottom of the avoidance groove 385 of the partition plate 38. Preferably, a central angle α corresponding to the avoidance groove 385 is not greater than 120 degrees, that is, a circumferential length of the avoidance groove 385 on the partition plate 38 is not greater than one third of a circumference.

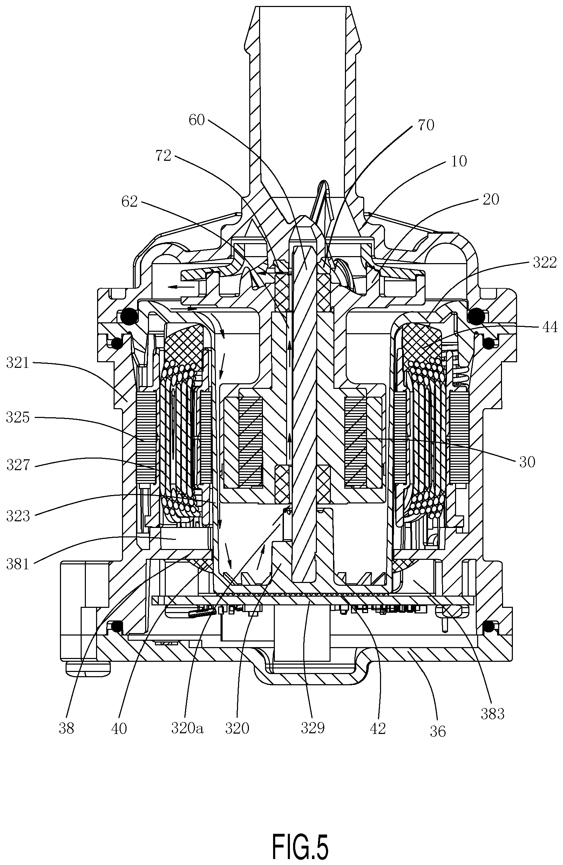

As shown in Figs. 5, 6, 12, and 13, an insulating frame 326 is provided between the stator core 325 and the coil 327, and the insulating frame 326 protrudes toward the circuit board 329 to form the above-mentioned terminal supporting portion 3261 corresponding to each conductive terminal 328. By the provision of the avoidance groove 385, the partition plate 38 can effectively avoid the terminal supporting portion 3261, so a size of the through hole 387 is not limited by a size of the terminal supporting portion 3261, as long as it allows an end portion of the conductive terminal 328 to pass through.

Compared with the prior art, the present disclosure separates the first space 381 for installing the coil 327 from the second space 383 for installing the circuit board 329 by the partition plate 38, thereby reducing heat generated by the coil 327 from dissipating toward the circuit board 329. In addition, the partition plate 38 is recessed toward the circuit board 329 to form the avoidance groove 385 to avoid the terminal supporting portion 3261, so that only a small through hole 387 adapted to a size of the end portion of the conductive terminal 328 needs to be provided at the bottom of the avoidance groove 385 of the partition plate 38, thereby further reducing heat from the coil 327 dissipating toward the circuit board 329 and effectively reducing the temperature of the circuit board 329.

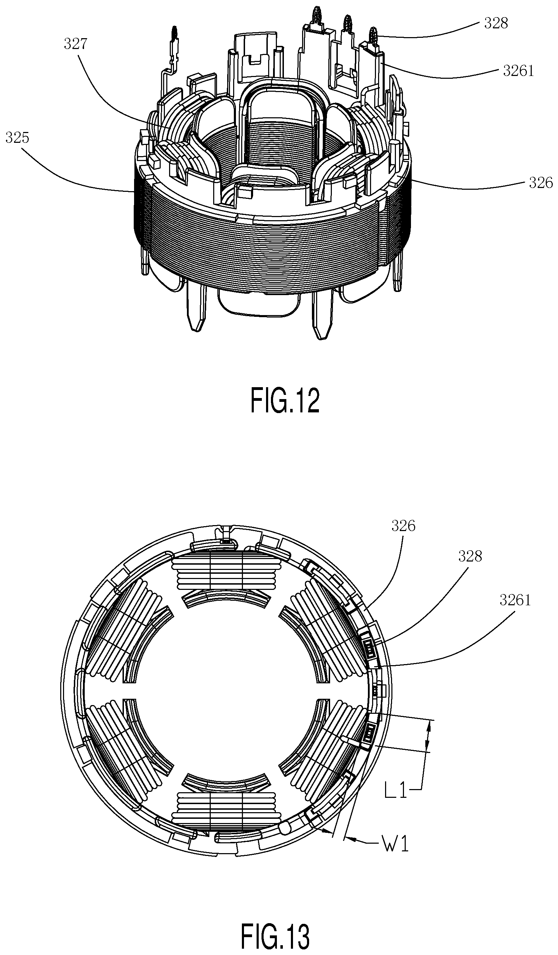

In order to reduce heat of the coil 327 being transferred toward the circuit board 329 through the through hole 387 of the partition plate 38 as much as possible, in a specific embodiment, as shown in Fig. 8, cross-sectional dimensions of the through hole 387 are set as: a length L0 being not greater than 3.0 mm and a width W0 being not greater than 2.0 mm. As shown in Figs. 12 to 13, in a cross-section of the terminal supporting portion 3261, a length is L1 and a width is W1, wherein L1 > L0 and W1 > W0.

As shown in Fig. 4, the terminal supporting portion 3261 extends into the avoidance groove 385 of the partition plate 38, and an end surface of the terminal supporting portion 3261 is as close as possible to the bottom of the avoidance groove 385 so as to reduce an axial interval therebetween. In a specific embodiment, the interval is set to be not greater than 5.0 mm, so that the terminal supporting portion 3261 can form a shielding effect for the through hole 387, thereby further reducing or even preventing heat from dissipating toward the circuit board 329 through the through hole 387.

As shown in Figs. 3 to 5, the circuit board 329 is in heat-conductive contact with a closed end of the stator inner housing 323. Preferably, the circuit board 329 abuts an outer end surface of the closed end of the stator inner housing 323 in the axial direction, and a thermally conductive medium 42 is filled between the two, so that heat of the circuit board 329 can be quickly transferred toward the closed end of the stator inner housing 323, and then dissipated to the outside through the flow of fluid flowing into the stator inner housing 323. By the heat-conductive contact between the circuit board 329 and the closed end of the stator inner housing 323, the end cap 36 does not need to consider heat dissipation requirements in its design, allowing for greater flexibility in the choice of materials, such as using cost-effective plastics.

In other embodiments, the circuit board 329 may also be in heat-conductive contact with the circumferential outer wall of the closed end of the stator inner housing 323. Specifically, the stator assembly 32 further includes a tubular metal cover having a bottom (not shown), and the metal cover is fixed to the closed end of the stator inner housing 323 and is in heat-conductive contact with the circumferential outer wall of the closed end of the stator inner housing 323. The circuit board 329 is in heat-conductive contact with the bottom of the metal cover, so as to conduct heat of the circuit board 329 via a tubular portion of the metal cover and the circumferential outer wall of the stator inner housing 323 to fluid in the stator inner housing 323.

To facilitate heat-conductive contact between the circuit board 329 and the stator inner housing 323, electronic components on the circuit board 329 are arranged on a side of the circuit board 329 facing away from the stator inner housing 323.

The open end of the stator inner housing 323 extends radially outward to form an annular connecting portion 322, and an outer diameter of the connecting portion 322 is comparable to outer diameters of the stator outer housing 321 and the pump housing 10. During assembly, as shown in Fig. 3, an outer edge of the connecting portion 322 is sandwiched between the stator outer housing 321 and the pump housing 10 and fixed together by a screw or the other. Preferably, a sealing ring 50 is disposed between the connecting portion 322 and the pump housing 10, so that the pump housing 10 and the stator inner housing 323 enclose a sealed space, and fluid flowing through the pump housing 10 will not leak out. Preferably, a sealing ring 44 is disposed between the connecting portion 322 and the stator outer housing 321, and a sealing ring 54 is disposed between the stator outer housing 321 and the end cap 36, so that the first space 381 and the second space 383 are overall sealed.

As shown in Fig. 3, preferably, a thermally conductive medium 44 is provided between the coil 327 and the stator inner housing 323, such as between the coil 327 and the connecting portion 322 of the stator inner housing 323, so that heat generated by the coil 327 also can be quickly conducted to the stator inner housing 323 and then dissipated outward through the fluid flowing therethrough.

In this embodiment, the stator outer housing 321 and the stator inner housing 323 are respectively molded and then assembled together to jointly form a stator housing of the stator assembly 32. In some embodiments, the stator outer housing 321 and the stator inner housing 323 may also be an integral structure, which is not limited to the specific embodiment.

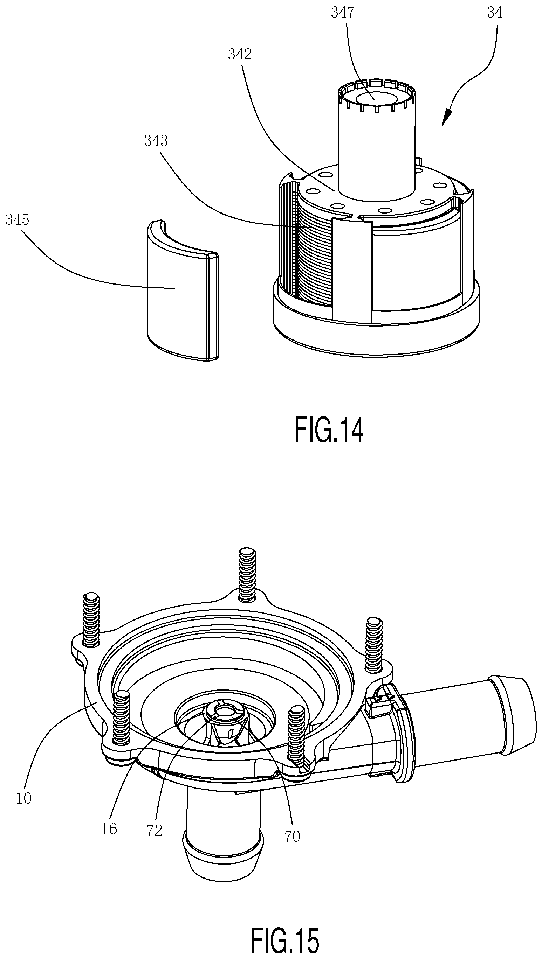

As shown in Fig. 14, the rotor assembly 34 includes a supporting body 342, a rotor core 343 embedded in the supporting body 342, and a permanent magnet 345 fixed to an outer peripheral side of the rotor core 343. A shaft hole 347 is provided at a center of the supporting body 342 to allow a motor shaft 60 to pass through. In this embodiment, a first shaft seat 320 is formed at a center of the closed end of the stator inner housing 323, and a second shaft seat 16 is provided at a center of an inner side the pump housing 10. The rotor assembly 34 is rotatably sleeved on a middle portion of the motor shaft 60, and both ends of the motor shaft 60 are respectively disposed in the first seat 320 and the second shaft seat 16. At least one end of the motor shaft 60 is fixedly connected to one of the shaft seats 320 or 16. Preferably, one end of the motor shaft 60 is fixedly connected to the first shaft seat 320, preferably being integrally with the first shaft seat 320, and the other end is loosely fitted to the second shaft seat 16.

As shown in Figs. 10 to 11, preferably, a plurality of first rib portions 324a are provided inside the stator inner housing 323, and preferably the first rib portions 324a are uniformly spaced in a circumferential direction. Each first rib portion 324a is substantially a triangular structure, with one side connected to a circumferential inner wall of the stator inner housing 323 and another side connected to an inner end surface of the closed end of the stator inner housing 323 in the axial direction, thereby improving a strength of the stator inner housing 323 and better supporting rotation of the rotor assembly 34.

The stator inner housing 323 may also be provided with a plurality of second rib portions 324b inside it, and preferably the second rib portions 324b are uniformly spaced in the circumferential direction. Each second rib portion 324b is substantially a triangular structure, with one side connected to a circumferential outer wall of the shaft seat 320 and another side connected to the inner end surface of the closed end of the stator inner housing 323 in the axial direction, thereby improving a strength of the shaft seat 320. The first rib portions 324a and the second rib portions 324b are radially spaced, so that the circuit board 329 can better transfer heat to the fluid through the closed end of the stator inner housing 323.

The circuit board 329 has a plurality of electronic components with large heat generation, for example, a microprocessor for controlling a rotational speed of the motor, an electrolytic capacitor for power supply smoothing and filtering, a filter inductor for shielding electromagnetic interference, and a plurality of switching elements of an inverter. At least a part of each of the components with large heat generation avoids a position corresponding to the shaft seat 320 and is arranged corresponding to an annular region of the closed end of the stator inner housing 323, which is outside the shaft seat 320, so as to better conduct heat to the fluid through the closed end of the stator inner housing 323.

As shown in Figs. 5, 6, and 11, preferably, an outer circumferential surface of the motor shaft 60 is formed with a guide groove 62, and the guide groove 62 extends along the axial direction of the motor shaft 60 to both ends of the motor shaft 60, connecting spaces on both axial sides of the rotor assembly 34, so that the fluid can flow between the impeller 20 and the stator inner housing 323 along a path indicated by arrows in Fig. 5. Preferably, an outer end of the shaft seat 320 is provided with a notch 320a, and the fluid can flow into the guide groove 62 of the shaft seat 320 through the notch 320a and then flow toward the impeller 20 along the guide groove 62. In the illustrated embodiment, there is one guide groove 62. In other embodiments, there may be a plurality of guide grooves 62, which are spaced along the circumferential direction of the motor shaft 60.

As shown in Figs. 5, 6, and 15, preferably, an end of the motor shaft 60 connected to the pump housing 10 is sleeved with a washer 70, and the washer 70 is connected to the shaft seat 16, and corresponding to a position of the impeller 20. A radial slot 72 is formed on an axial end surface of the washer 70 away from the pump housing 10, the groove 72 extends in a radial direction, with an inner side communicating with the guide groove 62 of the motor shaft 60, and an outer side communicating with a space inside the pump housing 10. When fluid flows upward along the guide groove 62 of the motor shaft 60 to the washer 70, it can flow outward along the groove 72 and return to the impeller 20. In the illustrated embodiment, there are a plurality of grooves 72, which are spaced along the circumferential direction of the washer 70. In other embodiments, there may be one groove 72. In other embodiments, a radial hole or a radial slot, etc., may also be provided on other components to replace the slot 72, as long as the fluid in the guide groove 62 can flow outward through the radial hole or radial slot, etc., and return to the impeller 20.

During operation of the fluid pump of this embodiment, fluid enters from the inlet 12 of the pump housing 10 and, by rotation of the impeller 20, is driven to flow out from the outlet 14. As indicated by arrows in Fig. 5, a part of the fluid flows through a gap between a periphery of the rotor assembly 34 and the stator inner housing 323 toward a bottom space of the stator inner housing 323, absorbing heat from the circuit board 329 that is in heat-conductive contact with the stator inner housing 323; after absorbing heat, the fluid enters, through the notch 320a of the first shaft seat 320, into the guide groove 62 of the motor shaft 60 and flows upward along the guide groove 62, and then flows along the groove 72 of the washer 70 toward the impeller 20, and is discharged from the outlet 14 of the pump housing 10 under the action of the impeller 20. Fluid circulating along this path can transfer heat generated during the operation of the motor 30 into the fluid and dissipate it to the outside, further improving the heat dissipation effect, enabling the circuit board 329 to operate at an appropriate temperature, avoiding failures, and enhancing electrical safety.

It should be noted that the above embodiments only represent the preferred embodiments of the present disclosure, the descriptions provided are specific and detailed, but they should not be construed as limitations on the present disclosure. It should be pointed out that, for those skilled in the art, various modifications and improvements can be made without departing from the concept of the present disclosure, such as combinations of different features in the various embodiments, all of which should fall within the scope of protection of the present disclosure.

## Claims

1. A fluid pump, comprising a pump housing, an impeller disposed in the pump housing, and a motor connected to the impeller, the motor comprising a stator assembly and a rotor assembly, the impeller being connected to the rotor assembly, **characterized in that**, the stator assembly comprises a stator housing, a stator core disposed in the stator housing, a coil wound on the stator core, a conductive terminal electrically connected to the coil, a terminal supporting portion for supporting the conductive terminal, and a circuit board electrically connected to the conductive terminal; a partition plate is provided in the stator housing, the partition plate dividing an internal space of the stator housing into a first space and a second space, the coil and the circuit board being respectively disposed in the first space and the second space; the partition plate is recessed toward the circuit board to form an avoidance groove for accommodating the terminal supporting portion; one end of the conductive terminal in an axial direction is located in the terminal supporting portion, and the other end of the conductive terminal in the axial direction passes through a bottom of the avoidance groove and is then connected to the circuit board.

2. The fluid pump according to claim 1, **characterized in that**, an insulating frame is provided between the coil and the stator core, and the insulating frame protrudes toward the partition plate to form the terminal supporting portion.

3. The fluid pump according to claim 1, **characterized in that**, a through hole is provided at the bottom of the avoidance groove of the partition plate for the conductive terminal to pass through, and a cross-sectional size of the through hole is smaller than a cross-sectional size of the terminal supporting portion.

4. The fluid pump according to claim 3, **characterized in that**, an axial interval between the terminal supporting portion and the bottom of the avoidance groove is not greater than 5.0 mm, and a length of the through hole is not greater than 3.0 mm and a width of the through hole is not greater than 2.0 mm.

5. The fluid pump according to claim 3, **characterized in that**, the motor is a three-phase motor with three or four conductive terminals, three or four through holes are correspondingly provided at the bottom of the avoidance groove of the partition plate for end portions of the three or four conductive terminals to pass through.

6. The fluid pump according to any one of claims 1 to 5, **characterized in that**, the stator housing comprises a tubular stator outer housing and a stator inner housing, the stator inner housing being disposed in the stator outer housing and spaced from the stator outer housing in a radial direction, the rotor assembly being disposed in the stator inner housing, and the partition plate being located between an inner wall of the stator outer housing and an outer wall of the stator inner housing.

7. The fluid pump according to claim 6, **characterized in that**, the stator inner housing comprises an open end and a closed end which are opposite in the axial direction, the open end faces toward the pump housing, and an outer end surface of the closed end in the axial direction or a circumferential outer wall of the closed end is in heat-conductive contact with the circuit board.

8. The fluid pump according to claim 7, **characterized in that**, the rotor assembly is rotatably sleeved on a motor shaft; a shaft seat is formed at a center of the closed end of the stator inner housing, one end of the motor shaft is disposed in the shaft seat and fixedly connected to the shaft seat, electronic components on the circuit board are disposed on a side of the circuit board away from the closed end of the stator inner housing; components among the electronic components with large heat generation comprise a microprocessor for controlling a rotational speed of the motor, an electrolytic capacitor for power supply smoothing and filtering, a filter inductor for shielding electromagnetic interference, and a plurality of switching elements forming an inverter; at least a part of each of the components with large heat generation avoids a position corresponding to the shaft seat and is arranged corresponding to an annular region of the closed end of the stator inner housing, which is outside the shaft seat.

9. The fluid pump according to claim 7, **characterized in that**, the stator assembly further comprises a tubular metal cover having a bottom, the metal cover being fixed to the closed end of the stator inner housing and in heat-conductive contact with the circumferential outer wall of the closed end, and the circuit board being in heat-conductive contact with the bottom of the metal cover, thereby allowing heat of the circuit board to be conducted to fluid in the stator inner housing via a tubular portion of the metal cover and the circumferential outer wall of the stator inner housing.

10. The fluid pump according to claim 6, **characterized in that**, the stator outer housing is a tubular structure with openings at both ends, one end is sealingly connected to the stator inner housing and the other end is sealingly connected to an end cap; the partition plate integrally extends from the inner wall of the stator outer housing toward the stator inner housing; the open end of the stator inner housing extends radially outward to form an annular connecting portion, and an outer edge of the connecting portion is sandwiched between the stator outer housing and the pump housing.

11. The fluid pump according to claim 6, **characterized in that**, a thermally conductive medium is provided between the partition plate and a circumferential outer wall of the stator inner housing so as to conduct heat of the partition plate to fluid flowing into the stator inner housing via the stator inner housing.

12. The fluid pump according to claim 11, **characterized in that**, the thermally conductive medium surrounds the circumferential outer wall of the stator inner housing, thereby closing a gap between the partition plate and the stator inner housing.

13. The fluid pump according to claim 6, **characterized in that**, the rotor assembly is rotatably sleeved on a motor shaft, a shaft seat is formed at a center of the closed end of the stator inner housing, one end of the motor shaft is disposed in the shaft seat and fixedly connected to the shaft seat; the motor shaft is provided with an axially extending guide groove, so that fluid can flow from an end of the motor shaft near the shaft seat toward the impeller along the guide groove.

14. The fluid pump according to claim 13, **characterized in that**, the shaft seat of the stator inner housing has a notch so that fluid can flow into the guide groove through the notch.

15. The fluid pump according to claim 13, **characterized in that**, an end of the motor shaft facing toward the pump housing is sleeved with a washer, and a radial slot is provided on a side of the washer away from the pump housing in the axial direction, so that fluid can flow toward the impeller along the guide groove and the slot.
